# FASCICULE DE BREVET EUROPEEN

(11) **EP 4 619 942 B1**
(45) Date de publication et mention de la délivrance du brevet: **30.09.2026**
(21) Numéro de dépôt: 23751663.8
(22) Date de dépôt: 30.06.2023
(51) Int. Cl.: G06T 11/10, H04N 5/33, H04N 9/43

(54) **PROCÉDÉ DE COLORISATION D'UNE IMAGE INFRAROUGE**
VERFAHREN ZUR FÄRBUNG EINES INFRAROTBILDES
METHOD FOR COLORIZING AN INFRARED IMAGE

(30) Priorité: 14.11.2022 FR 2211811
(43) Date de publication de la demande: 24.09.2025
(73) Titulaire: LYNRED, 91120 Palaiseau (FR)
(72) Inventeur: JOBERT, Gabriel, Veurey-Voroize 38113 (FR)
(74) Mandataire: Ipsilon
(86) Numéro de dépôt international: PCT/FR2023/051002
(87) Numéro de publication internationale: WO 2024/105312

(56) Documents cités:
- CN-A- 115 272 527
- US-A1- 2014 267 361
- MANDALAPU SARADA DEVI ET AL: "Extended performance comparison of pixel window size for colorization of grayscale images using YUV color space", ENGINEERING (NUICONE), 2012 NIRMA UNIVERSITY INTERNATIONAL CONFERENCE ON, IEEE, 6 December 2012 (2012-12-06), pages 1 - 5, XP032352530, ISBN: 978-1-4673-1720-7, DOI: 10.1109/NUICONE.2012.6493197
- ZHOU LIANG ET AL: "A Survey of Colormaps in Visualization", IEEE TRANSACTIONS ON VISUALIZATION AND COMPUTER GRAPHICS, IEEE, USA, vol. 22, no. 8, 1 August 2016 (2016-08-01), pages 2051 - 2069, XP011615448, ISSN: 1077-2626, [retrieved on 20160629], DOI: 10.1109/TVCG.2015.2489649
- LIU YANG YLIU0@CS WASHINGTON EDU ET AL: "Somewhere Over the Rainbow An Empirical Assessment of Quantitative Colormaps", PROCEEDINGS OF THE 33RD ACM/IEEE INTERNATIONAL CONFERENCE ON AUTOMATED SOFTWARE ENGINEERING, ACMPUB27, NEW YORK, NY, USA, 21 April 2018 (2018-04-21), pages 1 - 12, XP058699591, ISBN: 978-1-4503-5823-1, DOI: 10.1145/3173574.3174172

## Description

### DOMAINE TECHNIQUE

La présente invention a trait au domaine de la détection de rayonnements électromagnétiques et, plus précisément, à la détection de rayonnements infrarouges.

L'invention concerne plus spécifiquement la problématique de l'affichage d'une image infrarouge, c'est-à-dire une image issue de la détection de rayonnements infrarouges. Plus particulièrement, elle vise à coloriser une image infrarouge pour améliorer l'interprétation de l'image infrarouge par le cerveau humain.

Ainsi, l'invention peut être mise en œuvre dans de nombreux domaines pour lesquels les images infrarouges sont actuellement utilisées, tels que les domaines de l'aérospatial, de la sécurité, de la défense, du transport, de la thermographie, de l'inspection industrielle, de l'inspection de bâtiments, du loisir, de la santé...

### ETAT DE LA TECHNIQUE

Dans le domaine de la santé, les détecteurs infrarouges ont connu un grand développement depuis la pandémie liée au COVID 19. En effet, les personnes atteintes de cette maladie présentent classiquement une élévation de la température et les détecteurs infrarouges permettent d'obtenir une image illustrant la température des objets présents dans une scène. Ainsi, les détecteurs infrarouges sont notamment utilisés pour identifier la température des personnes pénétrant dans une enceinte afin de détecter si une personne présente une température élevée, et donc un risque d'être positif au COVID 19.

Les détecteurs infrarouges permettent classiquement d'obtenir une image restituée en niveaux de gris, dans laquelle chaque pixel représente la quantité de rayonnements captée par les détecteurs élémentaires formant les pixels de l'image infrarouge.

Or, cette représentation en niveaux de gris permet difficilement d'identifier visuellement la différence de température entre deux objets d'une scène présentant des températures proches.

Par exemple, dans le cas de la détection de personnes porteurs du COVID 19, cette représentation en niveaux de gris est souvent insuffisante pour qu'un opérateur puisse détecter rapidement une personne ayant une température élevée dans un groupe de personnes.

Il est donc recherché d'améliorer cette représentation en colorisant la représentation de la quantité de rayonnements captée par les détecteurs élémentaires formant les pixels de l'image infrarouge.

Cette recherche est motivée notamment par le fait que l'œil humain ne peut percevoir qu'un nombre limité de nuances de gris, entre 120 et 180 nuances pour une personne occidentale entrainée selon les études, tandis qu'une personne peut percevoir jusqu'à 2 millions de couleurs. Ainsi, en choisissant bien les couleurs, il est possible d'améliorer significativement la perception des détails d'une image infrarouge.

A cet effet, il est connu des documents WO 2016/179050, US 10,298,859 ou WO 2014/200586 de transformer une image infrarouge en niveaux de gris en une image colorisée au moyen de l'application d'une palette de couleurs. Une palette de couleurs permet d'associer, pour chaque valeur de pixel codée en niveaux de gris, une valeur de pixel codée dans un espace de couleurs.

Pour définir un espace de couleurs, on considère le spectre lumineux de scène *W*(*λ*) en unité de puissance, avec *λ* la longueur d'onde en micromètres. Dans le cas d'une scène réelle en lumière visible, *W*(*λ*) est la fraction réfléchie, diffusée ou transmise de la scène éclairée par une source extérieure de longueur spectrale donnée, de préférence une source blanche, c'est-à-dire une large bande dans le visible. Dans le cas d'un affichage par un écran, *W*(*λ*) est une combinaison linéaire additive des spectres d'émission d'un triplet de sources élémentaires, pixels rouges, verts et bleus.

L'œil humain perçoit la luminosité et la couleur respectivement par les bâtonnets et les cônes, présents dans la rétine. En condition de faible luminosité, typiquement en vision scotopique, les bâtonnets fournissent une réponse spectrale unique. En condition de bonne luminosité, en vision photopique, les cônes participent à la perception de la couleur, et sont classés selon trois familles : courts, moyens et longs, qui présentent des réponses spectrales distinctes centrées sur des longueurs d'ondes courtes, moyennes et longues.

Ainsi, pour l'œil humain, la couleur se caractérise par un simple triplet scalaire, et non un spectre complet de scène. Cet argument permet d'expliquer comment on peut restituer fidèlement une couleur via un écran constitué de trois sources élémentaires de longueurs spectrales rouge, vert et bleu.

Dans l'espace sRGB pour « standard Reg-Green-Blue » dans la littérature anglo-saxonne, une couleur est représentée par le triplet de couleurs rouge, vert et bleu, généralement codé sur une profondeur de trois fois 8bits, soit 24bits.

Pour obtenir une représentation plus précise des couleurs, d'autres espaces ont été définis au cours du temps. Par exemple, l'espace CIE XYZ est un système de coordonnées pour l'espace colorimétrique que la Commission Internationale de l'Eclairage (CIE) a défini en 1931. Il dérive de l'espace sRGB et postule que les relations entre les grandeurs physiques et la perception sont linéaires. Cette approximation place l'ensemble des points représentatifs de couleurs dans un espace vectoriel à trois dimensions. Pour définir cet espace CIE XYZ, des expériences colorimétriques ont été requises en demandant à des personnes d'ajuster les proportions de trois couleurs primaires d'expérimentation de façon à obtenir une tache de couleur identique à celle évaluée. La somme des composantes « X », « Y » et « Z » représente la luminance absolue, mais pas la luminance réellement perçue.

La Commission Internationale de l'Eclairage (CIE) a également défini en 1976 l'espace CIE LAB, à partir de l'espace CIE XYZ. Il s'agit d'un espace colorimétrique particulièrement utilisé pour la caractérisation des couleurs de surface.

Trois grandeurs caractérisent les couleurs : la clarté L, qui dérive de la luminance de la surface, et deux paramètres a et b qui expriment l'écart de la couleur par rapport à celle d'une surface grise de même clarté. L'existence d'une surface grise, non colorée, achromatique, implique d'indiquer explicitement la composition de la lumière qui éclaire la surface colorée. Cet « illuminant » est souvent la lumière du jour normalisée.

L'espace CIE LAB présente comme défaut majeur le fait qu'il ne modélise pas correctement la perception humaine de la luminance et de la teinte. C'est-à-dire qu'un déplacement quelconque d'une longueur euclidienne élémentaire dans l'espace CIE LAB, ne conduit pas nécessairement à une même distance de perception de couleur, notamment en termes de luminance et de teinte. Cela s'explique par le fait que ce modèle ne tient pas compte des principes d'adaptation perceptuelles de la chromaticité, telles que l'adaptation locale de luminance et de teinte.

Plus récemment, en 2002, la Commission Internationale de l'Eclairage (CIE) a défini l'espace CIE CAM02 pour calculer les corrélations mathématiques existant entre les six dimensions techniques liées à l'apparence de la couleur: luminosité, luminance, colorisation, chrominance, saturation et teinte.

Ce modèle est défini à partir des grandeurs X, Y et Z de l'espace CIE XYZ en prenant en compte la visualisation d'un stimulus de référence. Ce stimulus correspond à un point blanc de référence. Le modèle CIE CAM02 prend également en considération l'arrière-plan sur lequel le stimulus est observé, des informations sur les conditions de luminance de l'environnant du stimulus, ainsi que des informations sur la prise ou non en compte des conditions de luminance par l'observateur du stimulus. Le modèle permet de prédire l'apparence de la couleur du stimulus avec ces attributs ou de calculer la couleur correspondante dans des conditions d'observation distinctes.

Il existe également d'autres espaces colorimétriques, par exemple l'espace HSV, pour « Hue-Saturation-Value » dans la littérature anglo-saxonne, ou encore l'espace HSL, pour « Hue-Saturation-Luminance ».

Par exemple, le document WO 2014/200586 propose une méthode pour générer des palettes de couleurs basées sur une interpolation dans l'espace HSL. A partir d'une série de valeurs de teinte prédéfinies, la palette est construite par luminance constante, saturation fixe et interpolation linéaire sur la teinte. Selon le type de scène, cette méthode permet d'utiliser des gammes de teintes adaptées, par exemple une palette rouge-orange-jaune pour des scènes de désert, ou bien une palette jaune-vert-bleu pour des scènes de forêt.

Dans le document WO 2016/179050, des palettes de couleurs sont générées par interpolation dans l'espace sRGB à partir d'une série de couleurs de base, correspondant à des nœuds d'interpolations.

Le document US 10,298,859 présente des solutions de colorisation dans l'espace sRGB, CIE XYZ ou CIE LAB, principalement en utilisant des palettes de couleurs prédéfinies pour des applications spécifiques. Dans un mode de réalisation, une palette de couleurs est générée à partir des valeurs minimum et maximum de niveau de gris d'une image infrarouge. Cette palette de couleur est donc adaptée à la dynamique de la scène observée.

Ainsi, une scène à faible contraste thermique est représentée avec une faible dynamique de teinte, ce qui est compensé par une dynamique de luminance adaptée. Ce document propose également d'augmenter le contraste perçu en utilisant un filtre de luminance qui présente des oscillations.

Quelle que soit la méthode utilisée, l'objectif est d'obtenir une palette de colorisation sur une image monochrome, en suivant une séquence de couleurs, représentée par des triplets sRGB, et en respectant un certain nombre de règles définies à partir d'un cahier des charges. Un tel cahier des charges comprend classiquement des critères à la fois de cognition et de communication, ces critères pouvant se trouver en contradiction.

Les critères de communication concernent la recherche d'un aspect esthétique, le respect d'une charte graphique ou encore la conformité à une application évocative spécifique, par exemple la couleur souhaitée de représentation des animaux pour des images de chasse.

Les critères de cognition visent, par exemple, à faciliter l'interprétation de l'image selon le type de scène, à améliorer la perception du contraste de l'image, à augmenter la saillance sur le type d'objets d'intérêt ou à faciliter l'interprétation de l'image pour les personnes présentant de déficiences visuelles, typiquement pour les personnes daltoniennes.

Dans tous les cas, les critères de cognition sont distincts d'une personne à l'autre.

Or, les solutions existantes permettent de concevoir des palettes de couleurs linéaires en luminance absolue, mais elles ne sont pas linéaires en termes de perception au regard des critères de cognition d'une personne spécifique. Il s'ensuit que certains détails d'une image infrarouge colorisée ne sont pas forcément visibles pour une personne donnée, alors qu'ils peuvent l'être par une autre personne.

Le problème technique de l'invention est donc d'obtenir un procédé de colorisation d'une image infrarouge avec une palette de couleurs linéaire en fonction de la perception d'une personne, de sorte qu'une personne puisse modifier simplement la palette de couleurs pour une application spécifique et/ou pour une perception personnelle.

### EXPOSE DE L'INVENTION

Pour répondre à ce problème technique, l'invention propose d'utiliser une palette de couleurs définie dans l'espace CIE CAM02-UCS par une trajectoire paramétrique. Cet espace colorimétrique uniforme CIE CAM02-UCS est défini dans l'article R. Luo, G. Cui et C. Li, «Uniform colour spaces based on CIECAM02 colour appearance model» Color Research and Application, 2006. Dans cet espace cartésien d'axes j*, a* et b*, j* correspond à la luminance perçue, a* correspond à l'axe des couleurs bleu à jaune et b* correspond à l'axe des couleurs vert à rouge.

La chrominance est définie par l'équation suivante : $c * = \sqrt{a {*}^{2} + b {*}^{2}}$

La teinte est définie par l'équation suivante : $h * = atan 2 \left(\frac{b *}{a *}\right)$

Plus précisément, l'invention est issue d'une observation selon laquelle, pour obtenir une linéarité efficace en termes de perception, le paramètre de cette trajectoire doit être le vecteur d'angle polaire. Selon cette même observation, la trajectoire projetée dans le plan de teinte et de chrominance doit également suivre une ou deux ellipses alors que la dynamique de la luminance perçue par rapport aux valeurs de niveaux de gris doit suivre une ou deux droites.

Avec l'invention, un utilisateur peut utiliser des définitions mathématiques prédéfinies de cette trajectoire paramétrique pour différentes applications et obtenir une palette de couleurs linéaire en termes de perception au regard de critères de cognition génériques.

En outre, l'utilisateur peut également régler certains paramètres de cette trajectoire paramétrique pour adapter un critère de cognition générique à son ressenti propre.

Ainsi, l'invention concerne un procédé de colorisation d'une image infrarouge comprenant les étapes suivantes :
- acquisition d'une image infrarouge obtenue à partir d'un capteur infrarouge comprenant un ensemble de détecteurs élémentaires, ladite image infrarouge comprenant, pour chaque détecteur élémentaire, un pixel dont la valeur est codée en niveaux de gris correspondant à une valeur représentant un rayonnement infrarouge reçu par ledit détecteur élémentaire ; et
- génération d'une image colorisée en associant à chaque valeur de pixel codée en niveaux de gris une valeur de pixel codée dans un espace de couleurs au moyen d'une palette de couleurs.

L'invention se caractérise en ce que ladite palette de couleurs est définie dans l'espace CIE CAM02-UCS par un module de génération de palettes utilisant une trajectoire paramétrique dans laquelle un paramètre est constitué par un vecteur d'angle polaire de la trajectoire paramétrique, cette dernière étant définie de sorte que :
- la trajectoire paramétrique projetée dans un plan de teinte et de chrominance suive une ou deux ellipses ; et
- une dynamique de la luminance perçue par rapport aux valeurs de niveaux de gris suive une ou deux droites.

De préférence, la trajectoire paramétrique suit la relation suivante : $\left\{\begin{matrix}a ′ \left(ϕ\right) = {a}_{ell} \left(cosϕ-1\right) \\ b ′ \left(ϕ\right) = {b}_{ell} sinϕ\end{matrix}\right.$ avec un premier demi axe (aₑₗₗ) correspondant à une chrominance à l'apogée (c_{c}*) divisée par deux, et avec un second demi axe (bₑₗₗ) défini en fonction du premier demi axe (aₑₗₗ) avec : ${b}_{ell} = {a}_{ell} \sqrt{1 - {e}^{2}} ;$ si une excentricité (e) de l'ellipse est positive ; et ${b}_{ell} = \frac{{a}_{ell}}{\sqrt{1 - {e}^{2}}} ;$ si excentricité (e) de l'ellipse est négative.

Avec ces paramètres de construction précis, l'invention permet d'obtenir une palette de couleurs conçue linéairement dans l'espace CIE CAM02-UCS afin de garantir une bonne linéarité de perception de la luminance.

La palette de couleurs ainsi définie peut ensuite être modifiée par un utilisateur en fonction de ses attentes propres. Pour ce faire, le procédé peut comporter également les étapes suivantes :
- affichage de ladite image colorisée sur un écran visible par un utilisateur ; et
- récupération, depuis un interface homme machine, des modifications de colorisation attendues par l'utilisateur.

De préférence, l'interface homme machine permet de modifier une teinte à l'apogée, une chrominance à l'apogée, une dynamique du vecteur d'angle polaire, une excentricité de ladite au moins une ellipse projetée dans le plan de teinte et de chrominance, et/ou une dynamique de la luminance perçue. Ces paramètres permettent de modifier une palette de couleurs avec des notions intelligibles pour un homme du métier attaché à l'amélioration de la chromatographie des images.

Au sens de l'invention, l'apogée de la teinte ou de la chrominance fait référence au point pour lequel l'angle polaire correspond à π. Dans le cas où l'ellipticité est positive, cette apogée correspond à un maximum de chrominance.

De préférence, la dynamique du vecteur d'angle polaire est limitée entre 0 et 2π ou 2π et 0.

Par ailleurs, pour simplifier la sélection d'une palette de couleurs pour des applications spécifiques, ladite interface homme machine peut également permettre de sélectionner des palettes prédéfinies.

Par exemple, pour évoquer l'idée de l'imagerie thermique, tout en évitant les teintes violettes peu esthétiques et les teintes blanches ou jaunes trop agressives, une première palette prédéfinie présente préférentiellement une teinte à l'apogée comprise entre 20 et 30°, une chrominance à l'apogée comprise entre 30 et 40, une dynamique du vecteur d'angle polaire comprise entre 0 et 1.8π, une excentricité d'une ellipse projetée dans le plan de teinte et de chrominance comprise entre -0.35 et -0.25, et une dynamique de la luminance perçue comprise entre 5 et 100. Cette première palette prédéfinie évite le blanc pur et le jaune trop vif pour la représentation des tons chauds, afin de limiter l'effet d'agression et de fatigue visuelle.

Pour des applications de vision nocturne, la représentation monochromatique verte d'une image nocturne prend comme référence le scintillateur au phosphore utilisé dans les tubes d'intensificateurs de lumière, qui présente une longueur spectrale de réémission centrée sur le vert. L'utilisation du vert est devenue iconique et évocatrice au grand public de l'imagerie nocturne, puisque portée notamment par la propagande militaire, par l'intermédiaire du cinéma et des jeux vidéo. L'utilisation du vert présente aussi des avantages en termes de sensibilité à la lumière, puisque la courbe de sensibilité spectrale est maximale autour de 555 nanomètres, du moins dans des conditions de bonne luminosité.

Dans ce genre d'applications de vision nocturne, l'afficheur est généralement réglé avec une très faible luminosité. Cela permet d'une part de réduire le temps d'adaptation de la vision de l'utilisateur lorsqu'il arrête de visualiser l'écran d'affichage de l'image infrarouge colorisée pour observer directement son environnement ; et d'autre part cela permet de réduire la lumière réfléchie sur le visage, pour des raisons de furtivité.

Or, en vision scotopique, la courbe de sensibilité spectrale s'adapte à l'obscurité, en faisant intervenir davantage les bâtonnets plutôt que les cônes, il s'agit alors de vision scotopique dont la courbe de sensibilité est centrée autour de 507 nanomètres.

La seconde palette prédéfinie est conçue pour faciliter la visualisation d'une image infrarouge en conditions d'obscurité, tout en limitant la fatigue visuelle en cas de visualisation prolongée d'un flux vidéo. Pour ce faire, la seconde palette prédéfinie présente une teinte à l'apogée comprise entre -170 et -160°, une chrominance à l'apogée comprise entre 10 et 20, une dynamique du vecteur d'angle polaire comprise entre 0 et 2π, une excentricité d'une ellipse projetée dans le plan de teinte et de chrominance comprise entre 0.2 et 0.4, et une dynamique de la luminance perçue comprise entre 100 et 20.

Avec cette seconde palette prédéfinie, l'image parait douce, ronde, tout en restant nette et saillante sur les objets d'intérêt. Le fond est affiché en clair, notamment pour le ciel, ce qui réduit les efforts à la fois sur l'ouverture de la pupille et sur l'interprétation, notamment par familiarité des scènes de jour où le ciel est clair. L'aspect esthétique de l'image colorisée donne un aspect d'impression de papier glacé, jugé plutôt agréable.

Une troisième palette prédéfinie est constituée par à une palette à seuil, c'est-à-dire une palette qui se construit par concaténation de deux palettes, avec un seuil en niveau de gris à partir duquel une transition entre les deux palettes est réalisée. De préférence, une continuité de couleurs est assurée au niveau dudit seuil. Ces deux palettes permettent de séparer deux familles/classes de pixels en les colorisant différemment, et en maximisant la dynamique de luminance perçue sur chaque classe. Ces deux familles/classes de pixels peuvent se distinguer par des variations de teintes ou de chrominances distinctes.

Pour faire ressortir les zones chaudes de la température ambiante d'une scène, en maximisant les détails sur les deux zones, la troisième palette prédéfinie présente préférentiellement une première portion avec une teinte à l'apogée comprise entre -110 et -100°, une chrominance à l'apogée comprise entre 15 et 20, une dynamique du vecteur d'angle polaire comprise entre 2π et 0, une excentricité d'une première ellipse projetée dans le plan de teinte et de chrominance comprise entre 0.5 et 0.7, et une dynamique de la luminance perçue comprise entre 100 et 5 ; puis une seconde portion avec une teinte à l'apogée comprise entre 25 et 40°, une chrominance à l'apogée comprise entre 30 et 40, une dynamique du vecteur d'angle polaire comprise entre 0 et 1.8π, une excentricité d'une seconde ellipse projetée dans le plan de teinte et de chrominance comprise entre 0.3 et 0.4, et une dynamique de la luminance perçue comprise entre 5 et 99, le seuil entre les deux portions étant fixé entre 45 et 55% des valeurs en niveaux de gris.

Dans cette troisième palette prédéfinie, la représentation de l'objet d'intérêt est faite par une palette proche de la première palette prédéfinie, à la différence que la dynamique de teinte est légèrement réduite pour ne pas trop surcharger l'image.

Ainsi, l'objet d'intérêt est colorisé normalement, ce qui facilite l'interprétation de la nature de l'image. La luminance perçue présente une dynamique pleine et croissante pour assurer la linéarité d'évolution des couleurs pour l'utilisateur.

La représentation du fond se fait également par l'intermédiaire d'une palette elliptique, de luminance perçue décroissante pleine dynamique, et d'apogée bleu ardoise. Cette couleur d'apogée est choisie à faible chrominance car il est recherché de porter moins l'attention au fond et plus d'attention sur l'objet d'intérêt. De même, avec cette troisième palette prédéfinie, il est recherché de limiter la variation de teinte via une trajectoire à forte ellipticité. Ces choix ont aussi pour conséquence de réduire la sensibilité aux faibles variations d'intensité, limitant en partie la perception du bruit, le rapport signal sur bruit étant généralement plus faible sur le fond ambiant que sur l'objet d'intérêt chaud.

La luminance perçue décroissante permet d'éclaircir le fond pour améliorer la saillance sur l'objet d'intérêt. Cette saillance est appuyée par un contour noir au niveau du seuil, et par le contraste de chrominance entre les deux classes de pixels. Pour ce faire, les pixels autour du seuil sont colorisés avec des couleurs sombres à faible chrominance, typiquement des couleurs proches du noir. Ces pixels sont généralement à la frontière entre le fond et l'objet d'intérêt.

Enfin, l'utilisation du bleu pour la représentation du fond se justifie d'une part car c'est une teinte qui évoque une température froide, et d'autre part parce que c'est une couleur qui évoque le ciel, ce qui est une représentation rassurante pour l'humain. Pour cette même raison, l'utilisation du bleu provoque une illusion de profondeur en rappelant l'horizon, c'est du moins une technique utilisée par les impressionnistes pour produire cet effet.

Dans une quatrième palette prédéfinie, il est recherché de définir une palette qui comprend une section à niveaux de gris à pleine dynamique de luminance perçue et, à partir d'un seuil chaud, une section colorisée vive proche avec des teintes rouges.

Pour des applications de chasse, les points chauds sont généralement des animaux, qu'il est recherché de faire ressortir de l'image. L'environnement est aussi très important dans une telle application. Il est généralement constitué d'éléments complexes tels que de la végétation, d'où l'importance de la représenter en pleine dynamique de gris. D'autres applications peuvent avoir besoin d' alerter l'utilisateur, par exemple l'application ADAS, pour « Advanced Driver Assistance Systems » dans la littérature anglo-saxonne, consistant à alerter un conducteur sur la présence d'un piéton, pour l'assistance au freinage.

Pour ce faire, la quatrième palette prédéfinie présente préférentiellement une première portion avec une chrominance nulle et une dynamique de la luminance perçue comprise entre 0 et 100 ; puis une seconde portion avec une teinte à l'apogée comprise entre 30 et 35°, une chrominance à l'apogée comprise entre 30 et 40, une dynamique du vecteur d'angle polaire comprise entre 2π et 0, une excentricité d'une ellipse projetée dans le plan de teinte et de chrominance comprise entre 0.8 et 0.9, et une dynamique de la luminance perçue comprise entre 100 et 30, le seuil entre les deux portions étant fixé entre 75 et 85% des valeurs en niveaux de gris.

### DESCRIPTION SOMMAIRE DES FIGURES

La manière de réaliser l'invention ainsi que les avantages qui en découlent, ressortiront bien des modes de réalisation qui suivent, donnés à titre indicatif mais non limitatif, à l'appui dans figures 1 à 7 dans lesquelles :
La figure 1 est une représentation schématique d'un procédé de colorisation d'une image infrarouge selon un mode de réalisation de l'invention ;
La figure 2 est une représentation schématique d'une génération paramétrique d'une palette de couleurs selon le procédé de la figure 1 avec une ellipse projetée dans un plan de teinte et de chrominance ;
La figure 3 illustre trois variations d'une génération paramétrique d'une palette de couleurs selon le procédé de la figure 1 avec une ellipse projetée dans le plan de teinte et de chrominance en fonction de la variation de l'excentricité de l'ellipse ;
La figure 4 illustre la dynamique de la luminance perçue et d'une ellipse projetée dans le plan de teinte et de chrominance pour une première palette prédéfinie du procédé de la figure 1 ;
La figure 5 illustre la dynamique de la luminance perçue et d'une ellipse projetée dans le plan de teinte et de chrominance pour une seconde palette prédéfinie du procédé de la figure 1;
La figure 6 illustre la dynamique de la luminance perçue et deux ellipses projetées dans le plan de teinte et de chrominance pour une troisième palette prédéfinie du procédé de la figure 1 ; et
La figure 7 illustre la dynamique de la luminance perçue et une ellipse projetée dans le plan de teinte et de chrominance pour une quatrième palette prédéfinie du procédé de la figure 1.

### DESCRIPTION DETAILLEE DE L'INVENTION

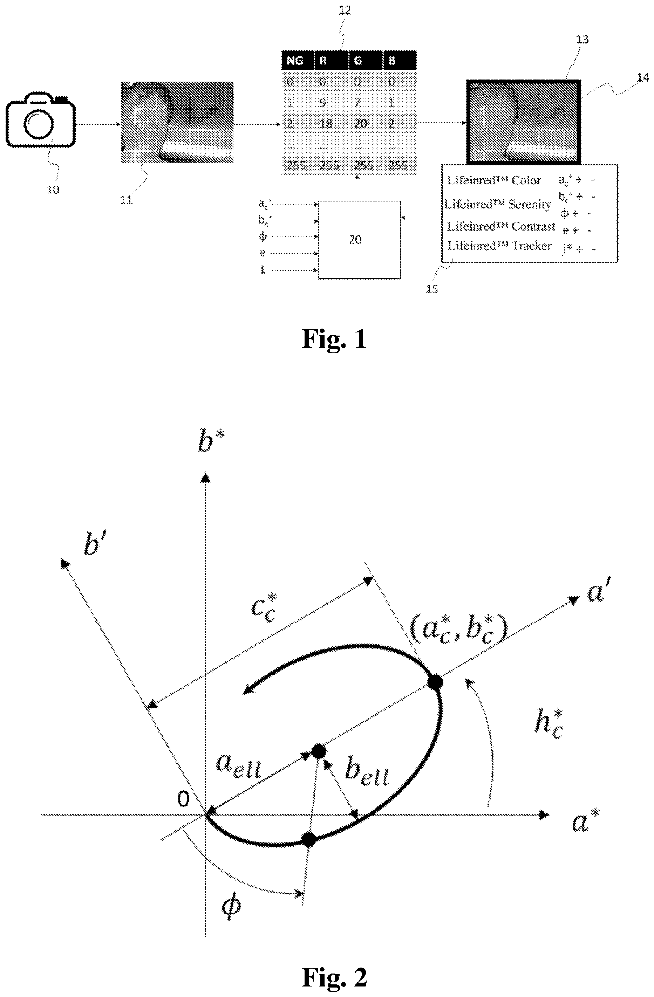

La figure 1 illustre un procédé de colorisation d'une image infrarouge **11** obtenue à partir d'un capteur infrarouge **10** comprenant un ensemble de détecteurs élémentaires. De manière classique, les détecteurs élémentaires sont constitués de microbolomètres agencés sous forme matricielle.

Pour chaque ligne ou pour chaque colonne de microbolomètres, un circuit de lecture permet de mesurer une quantité de rayonnements infrarouges captée par chaque détecteur élémentaire formant, ainsi, les pixels d'une image infrarouge.

Les valeurs issues de chaque pixel de l'image infrarouge peuvent être codées en niveaux de gris **NG** sur 8, 11 ou 14 bits sans changer l'invention. En outre, des prétraitements peuvent être réalisés sur l'image infrarouge **11** avant de mettre en œuvre le procédé de colorisation de l'invention.

Plus précisément, l'invention propose d'utiliser une palette de couleurs **12** pour transformer l'image infrarouge **11** codée en niveaux de gris **NG** en une image colorisée **13,** dont chaque pixel est codé par un système de couleurs, par exemple selon le standard sRGB.

Selon l'invention, la palette de couleurs **12** est définie dans l'espace CIE CAM02-UCS, en définissant chaque couleur par six caractéristiques : luminosité, luminance absolue, colorisation, chrominance c*, saturation et teinte h*. Ces six caractéristiques sont interdépendantes et peuvent être codées par un triplet de trois valeurs : *j*, a*,* et *b*,* avec le paramètre j* correspondant à la luminance perçue, a* correspondant à l'axe des couleurs bleu à jaune et b* correspondant à l'axe des couleurs vert à rouge.

Dans cet espace CIE CAM02 -UCS, la chrominance c* est définie par l'équation suivante : $c * = \sqrt{a {*}^{2} + b {*}^{2}}$

La teinte h* est définie par l'équation suivante : $h * = atan 2 \left(\frac{b *}{a *}\right)$

Plus précisément, l'invention propose de générer la palette de couleurs **12** dans l'espace CIE CAM02-UCS par un module de génération de palettes **20** utilisant une trajectoire paramétrique dans laquelle le paramètre est un vecteur d'angle polaire **Φ.** Cette définition paramétrique est contrainte de sorte que la trajectoire projetée dans le plan de teinte et de chrominance (O, a_{c}*, b_{c}*) suit une ou deux ellipses ; et la dynamique de la luminance perçue **j*** par rapport aux valeurs de niveaux de gris **NG** suit une ou deux droites.

La figure 2 illustre une représentation d'une ellipse dans le plan de teinte et de chrominance (O, a_{c}*, b_{c}*) d'une génération paramétrique d'une palette de couleurs **12.** Dans cet exemple, l'ellipse est formulée selon une trajectoire paramétrique, dont le paramètre est le vecteur d'angle polaire *ϕ=*[0*,..,ϕmax*] de longueur 2ⁿ, avec n correspondant à la profondeur de la valeur du pixel digitalisé. Ainsi, les différentes valeurs de niveaux de gris **NG** sont comprises entre 0 et 2ⁿ⁻¹. De préférence, la profondeur *ϕmax*=1.8*π.* De préférence, la dynamique du vecteur d'angle polaire **Φ** est limitée entre 0 et 2π ou 2π et 0.

Dans l'exemple de la figure 2, l'ellipse ne parcourt pas une rotation complète, c'est-à-dire qu'elle n'est pas fermée, pour éviter de finir la palette sur un blanc pur jugé agressif.

L'ellipse est définie selon l'équation suivante : $\left\{\begin{matrix}a ′ \left(ϕ\right) = {a}_{ell} \left(cosϕ-1\right) \\ b ′ \left(ϕ\right) = {b}_{ell} sinϕ\end{matrix}\right.$ dans laquelle l'ellipse présente un premier demi axe *aₑₗₗ* correspondant à une chrominance à l'apogée c_{c}* divisée par deux, dans le repère aligné sur les axes de l'ellipse (*O*, *a', b'*), et le second demi axe *bₑₗₗ* dépend du premier demi axe *aₑₗₗ* et de l'excentricité e de l'ellipse.

Plus précisément, le second demi axe *b*ₑₗₗ se déduit de l'excentricité souhaitée e, avec l'équation suivante, si l'excentricité est positive : ${b}_{ell} = {a}_{ell} \sqrt{1 - {e}^{2}}$

Lorsque l'excentricité est négative, le second demi axe suit l'équation suivante : ${b}_{ell} = \frac{{a}_{ell}}{\sqrt{1 - {e}^{2}}}$

Lorsque l'excentricité est positive, le premier demi axe *a*ₑₗₗ est plus grand que le second demi axe *b*ₑₗₗ alors que le premier demi axe *a*ₑₗₗ est plus petit que le second demi axe *b*ₑₗₗ lorsque l'excentricité est négative.

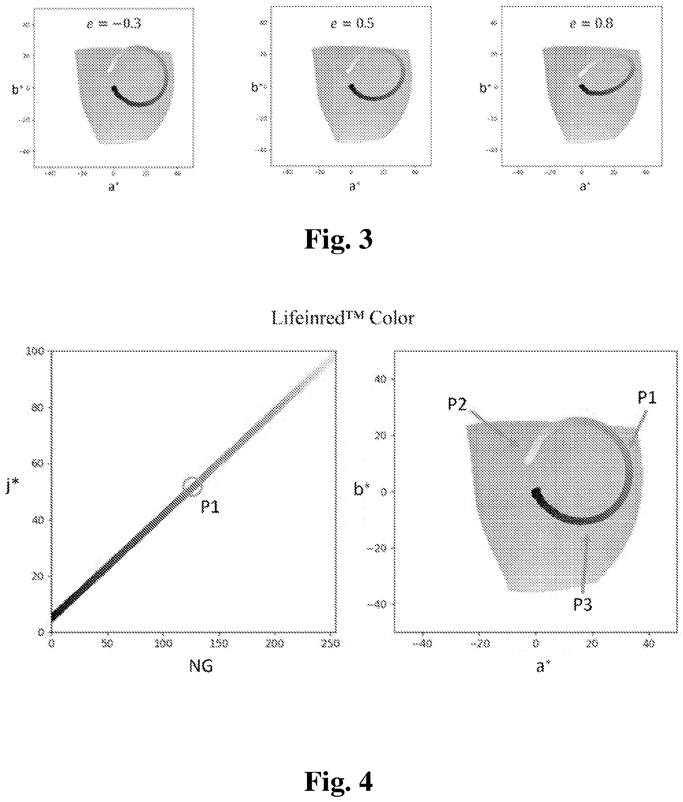

L'impact de la variation de l'excentricité *e* est illustré sur la figure 3 dans laquelle une trajectoire paramétrique avec une excentricité faible permet de profiter des nuances violacées et orangées, tandis qu'une trajectoire paramétrique avec une excentricité forte évite ces nuances, au risque de donner à l'image un aspect monochrome.

Pour des raisons cosmétiques et afin de faciliter la perception des détails via une bonne dynamique de teintes violacées/orangées, il est préférable de sélectionner une excentricité faible, typiquement une excentricité comprise entre -0.2 et -0.4, par exemple ***e***=-0.3.

Quelle que soit la valeur de l'excentricité choisie, il est possible d'effectuer un changement de repère pour écrire l'ellipse dans le repère (*O,a*,b**) de la figure 2 par simple rotation azimutale d'angle *h_{c}*,* c'est-à-dire par la teinte de l'apogée souhaitée, selon l'équation suivante : $\left\{\begin{matrix}a \left(ϕ\right) = a ′ \left(ϕ\right) cos {h}_{c}^{∗} - b ′ \left(ϕ\right) sin {h}_{c}^{∗} \\ b \left(ϕ\right) = a ′ \left(ϕ\right) sin {h}_{c}^{∗} + b ′ \left(ϕ\right) cos {h}_{c}^{∗}\end{matrix}\right.$

L'angle de teinte de l'apogée s'écrit *h_{c}*=atan2(b_{c}*,a_{c}*)* et la courbe de luminance perçue **j***(*ϕ*) est simplement une droite dont il est possible de fixer les bornes de dynamique. Les valeurs de teinte à l'apogée **h_{c}***, de chrominance à l'apogée **c_{c}***, de dynamique du vecteur d'angle polaire **Φ**, d'excentricité **e,** et/ou une dynamique de la luminance perçue **j*,** peuvent être sélectionnées en fonction de la typologie de la palette de couleurs recherchée. Par exemple, il est possible d'augmenter la dynamique de teintes en réduisant d'excentricité **e** de l'ellipse.

Avec ces paramètres précis de définition de la palette de couleurs **12,** il est possible d'obtenir une table associant à chaque valeur de niveaux de gris **NG** un triplet dans l'espace sRGB. Par exemple, cette conversion entre l'espace CIE CAM02-UCS et l'espace sRGB peut être réalisée par le module « colorspacious », codé en langage informatique Python. Cette table peut être appelée LUT pour « Look Up Table » dans la littérature anglo-saxonne.

Dans cette palette de couleurs **12,** chaque valeur en niveaux de gris **NG** est donc associée à un triplet de couleurs dans l'espace sRGB de sorte que l'image infrarouge **11** peut être transformée en une image colorisée **13.** L'image colorisée **13** peut ensuite être affichée sur un écran **14** afin qu'un utilisateur puisse détecter efficacement les éléments saillants d'une scène captée par un capteur infrarouge **10.**

Pour détecter des éléments précis dans des applications diverses, l'utilisateur peut utiliser une interface homme machine **15** pour sélectionner des palettes de couleurs prédéfinies.

En outre, l'interface homme machine **15** peut également permettre à l'utilisateur d' ajuster les valeurs de construction de la palette de couleurs **12.**

En effet, même si la palette de couleurs **12** est définie avec des valeurs de teinte à l'apogée **h_{c}*,** de chrominance à l'apogée **c_{c}*,** de dynamique du vecteur d'angle polaire **Φ,** d'excentricité **e,** et/ou une dynamique de la luminance perçue **j*,** l'utilisateur peut éventuellement modifier ces valeurs à travers l'interface homme machine **15.** Pour ce faire, l'utilisateur peut demander une incrémentation ou une diminution de chaque valeur afin de constater l'évolution de ces variations directement sur l'écran **14** de visualisation de l'image colorisée **13.**

En ce qui concerne les palettes de couleurs prédéfinies, quatre palettes peuvent être proposées à l'utilisateur via l'interface homme machine **15 : Lifeinred^{™} Color, Lifeinred^{™} Serenity, Lifeinred^{™} Contrast, et Lifeinred^{™} Tracker.**

Par exemple, la palette prédéfinie **Lifeinred^{™} Color** présente une teinte à l'apogée **h_{c}*** comprise entre 20 et 30°, une chrominance à l'apogée **c_{c}*** comprise entre 30 et 40, une dynamique du vecteur d'angle polaire **Φ** comprise entre 0 et 1.8π, une excentricité e d'une ellipse projetée dans le plan de teinte et de chrominance (O, a*,b*) comprise entre -0.35 et -0.25, et une dynamique de la luminance perçue **j*** comprise entre 5 et 100.

Tel qu'illustré sur la figure 4, cette palette prédéfinie **Lifeinred^{™} Color** comporte une dynamique de la luminance perçue **j*** droite et croissante et une ellipse dans le plan de teinte et de chrominance (O, a*,b*). Le point **P1** correspond à une couleur corail, le point **P2** correspond à une couleur vanille ou pèche et le point **P3** correspond à une couleur lie de vin.

La palette prédéfinie **Lifeinred^{™} Serenity** présente une teinte à l'apogée **h_{c}*** comprise entre -170 et -160°, une chrominance à l'apogée **c_{c}*** comprise entre 10 et 20, une dynamique du vecteur d'angle polaire **Φ** comprise entre 0 et 2π, une excentricité **e** d'une ellipse projetée dans le plan de teinte et de chrominance (O, a*,b*) comprise entre 0.2 et 0.4, et une dynamique de la luminance perçue **j*** comprise entre 100 et 20.

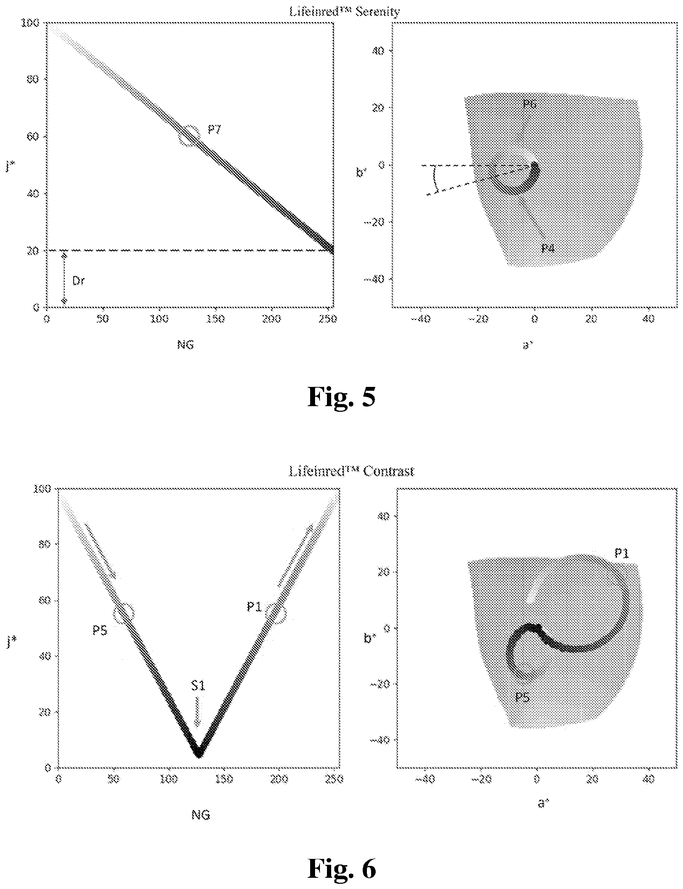

Tel qu'illustré sur la figure 5, cette palette prédéfinie **Lifeinred^{™} Serenity** comporte une dynamique de luminance perçue **j*** droite et décroissante avec une dynamique réduite **Dr** et une ellipse dans le plan de teinte et de chrominance (O, a*,b*). Le point **P6** correspond à une couleur vert d'eau, alors que le point **P5** correspond à une couleur gris ardoise et le point **P7** correspond à la couleur bleu sarcelle.

La palette prédéfinie **Lifeinred^{™} Contrast** présente une première portion avec une teinte à l'apogée **h_{c}*** comprise entre -110 et -100°, une chrominance à l'apogée **c_{c}*** comprise entre 15 et 20, une dynamique du vecteur d'angle polaire **Φ** comprise entre 2π et 0, une excentricité **e** d'une première ellipse projetée dans le plan (O, a*,b*) comprise entre 0.5 et 0.7, et une dynamique de la luminance perçue **j*** comprise entre 100 et 5.

La palette prédéfinie **Lifeinred^{™} Contrast** présente également une seconde portion avec une teinte à l'apogée **h_{c}*** comprise entre 25 et 40°, une chrominance à l'apogée **c_{c}*** comprise entre 30 et 40, une dynamique du vecteur d'angle polaire **Φ** comprise entre 0 et 1.8π, une excentricité **e** d'une seconde ellipse projetée dans le plan (O, a*,b*) comprise entre 0.3 et 0.4, et une dynamique de la luminance perçue **j*** comprise entre 5 et 100. Le seuil **S1** entre les deux portions est fixé entre 45 et 55% des valeurs en niveaux de gris **NG,** par exemple 50%.

Tel qu'illustré sur la figure 6, cette palette prédéfinie **Lifeinred^{™} Contrast** comporte une dynamique de la luminance perçue **j*** droite et décroissante jusqu'au seuil **S1** puis une dynamique de la luminance perçue **j*** droite et croissante. Deux ellipses sont formées dans le plan (O, a*,b*). Le point **P1** correspond à une couleur corail, également utilisée pour palette prédéfinie **Lifeinred^{™} Color,** tandis que le point **P5** correspond à la couleur bleu ardoise.

La palette prédéfinie **Lifeinred^{™} Tracker** présente une première portion avec une chrominance nulle et une dynamique de la luminance perçue **j*** comprise entre 0 et 100 ; puis une seconde portion avec une teinte à l'apogée **h_{c}*** comprise entre 30 et 35°, une chrominance à l'apogée **c_{c}*** comprise entre 30 et 40, une dynamique du vecteur d'angle polaire **Φ** comprise entre 2π et 0, une excentricité e d'une ellipse projetée dans le plan (O, a*,b*) comprise entre 0.8 et 0.9, et une dynamique de la luminance perçue **j*** comprise entre 100 et 30. Le seuil **S2** entre les deux portions étant fixé entre 75 et 85% des valeurs en niveaux de gris **NG,** par exemple 80%.

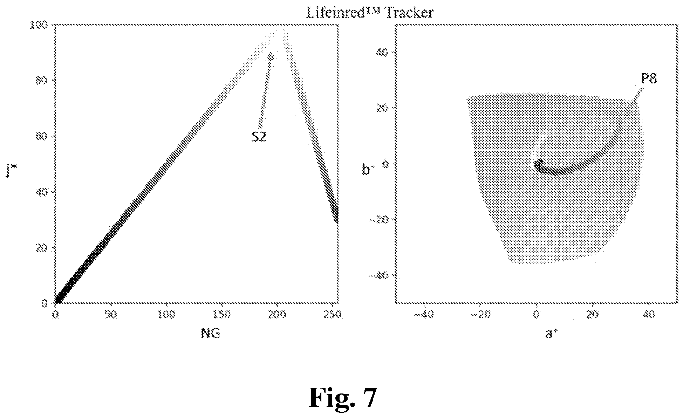

Tel qu'illustré sur la figure 7, cette palette prédéfinie **Lifeinred^{™} Tracker** comporte une dynamique de la luminance perçue **j*** droite et croissante jusqu'au seuil **S2** puis une dynamique de la luminance perçue **j*** droite et décroissante. Une ellipse est formée dans le plan **ab,** dans laquelle le point **P8** correspond à une couleur rouge brique.

Avec ces différentes palettes de couleurs prédéfinies et l'interface homme machine **15** permettant à l'utilisateur de modifier les paramètres de génération de la palette de couleur **12,** l'invention permet à un utilisateur d'obtenir un rendu linéaire en fonction de sa perception personnelle. L'invention permet ainsi d'observer plus distinctement les objets d'intérêt captés par un détecteur infrarouge.

## Revendications

1. Procédé de colorisation d'une image infrarouge (11) comprenant les étapes suivantes :
- acquisition d'une image infrarouge (11) obtenue à partir d'un capteur infrarouge (10) comprenant un ensemble de détecteurs élémentaires, ladite image infrarouge (11) comprenant, pour chaque détecteur élémentaire, un pixel dont la valeur est codée en niveaux de gris (NG) correspondant à une valeur représentant un rayonnement infrarouge reçu par ledit détecteur élémentaire ; et
- génération d'une image colorisée (13) en associant à chaque valeur de pixel codée en niveaux de gris (NG) une valeur de pixel codée dans un espace de couleur au moyen d'une palette de couleurs (12) ;
***caractérisé* en ce que** ladite palette de couleurs (12) est définie dans l'espace CIE CAM02-UCS par un module de génération de palettes (20) utilisant une trajectoire paramétrique dans laquelle un paramètre est un vecteur d'angle polaire, Φ, de la trajectoire paramétrique, cette dernière étant définie de sorte que :
- la trajectoire paramétrique projetée dans un plan de teinte et de chrominance (O, a*,b*) suive une ou deux ellipses ; et
- une dynamique de la luminance perçue (j*) par rapport aux valeurs de niveaux de gris (NG) suive une ou deux droites.

2. Procédé de colorisation d'une image infrarouge selon la revendication 1, ***dans lequel*** la trajectoire paramétrique suit la relation suivante : $\left\{\begin{matrix}a ′ \left(ϕ\right) = {a}_{ell} \left(cosϕ-1\right) \\ b ′ \left(ϕ\right) = {b}_{ell} sinϕ\end{matrix}\right.$ avec un premier demi axe, aₑₗₗ, correspondant à une chrominance à l'apogée (c_{c}*) divisée par deux, et un second demi axe, bₑₗₗ, défini en fonction du premier demi axe, aₑₗₗ, avec :
${b}_{ell} = {a}_{ell} \sqrt{1 - {e}^{2}}$; si une excentricité, e, de l'ellipse est positive ; et
${b}_{ell} = \frac{{a}_{ell}}{\sqrt{1 - {e}^{2}}}$; si excentricité, e, de l'ellipse est négative.

3. Procédé de colorisation d'une image infrarouge selon la revendication 1 ou 2, ***dans lequel*** le procédé comporte également les étapes suivantes :
- affichage de ladite image colorisée (13) sur un écran visible (14) par un utilisateur ; et
- récupération, depuis un interface homme machine (15), des modifications de colorisation attendues par l'utilisateur.

4. Procédé de colorisation d'une image infrarouge selon la revendication 3, ***dans lequel*** l'interface homme machine (15) permet de modifier une teinte à l'apogée (h_{c}*), une chrominance à l'apogée (c_{c}*), une dynamique du vecteur d'angle polaire Φ, une excentricité e de l'au moins une ellipse projetée dans le plan de teinte et de chrominance (O, a*,b*), et/ou une dynamique de la luminance perçue (j*).

5. Procédé de colorisation d'une image infrarouge selon l'une des revendications 1 à 4, ***dans lequel*** la dynamique du vecteur d'angle polaire Φ est limitée entre 0 et 2π ou 2π et 0.

6. Procédé de colorisation d'une image infrarouge selon l'une des revendications 3 et 4, ***dans lequel*** ladite interface homme machine (15) permet de sélectionner des palettes prédéfinies.

7. Procédé de colorisation d'une image infrarouge selon la revendication 6, ***dans lequel*** une première palette prédéfinie présente une teinte à l'apogée (h_{c}*) comprise entre 20 et 30°, une chrominance à l'apogée (c_{c}*) comprise entre 30 et 40, une dynamique du vecteur d'angle polaire Φ comprise entre 0 et 1.8π, une excentricité (e) d'une ellipse projetée dans le plan de teinte et de chrominance (O, a*,b*) comprise entre -0.35 et -0.25, et une dynamique de la luminance perçue (j*) comprise entre 5 et 100.

8. Procédé de colorisation d'une image infrarouge selon la revendication 6 ou 7, ***dans lequel*** une seconde palette prédéfinie présente une teinte à l'apogée (h_{c}*) comprise entre -170 et -160°, une chrominance à l'apogée (c_{c}*) comprise entre 10 et 20, une dynamique du vecteur d'angle polaire Φ comprise entre 0 et 2π, une excentricité e d'une ellipse projetée dans le plan de teinte et de chrominance (O, a*,b*) comprise entre 0.2 et 0.4, et une dynamique de la luminance perçue (j*) comprise entre 100 et 20.

9. Procédé de colorisation d'une image infrarouge selon l'une des revendications 6 à 8, ***dans lequel*** une troisième palette prédéfinie présente une première portion avec une teinte à l'apogée (h_{c}*) comprise entre -110 et -100°, une chrominance à l'apogée (c_{c}*) comprise entre 15 et 20, une dynamique du vecteur d'angle polaire Φ comprise entre 2π et 0, une excentricité (e) d'une première ellipse projetée dans le plan de teinte et de chrominance (O, a*,b*) comprise entre 0.5 et 0.7, et une dynamique de la luminance perçue (j*) comprise entre 100 et 5 ; puis une seconde portion avec une teinte à l'apogée (h_{c}*) comprise entre 25 et 40°, une chrominance à l'apogée (c_{c}*) comprise entre 30 et 40, une dynamique du vecteur d'angle polaire Φ comprise entre 0 et 1.8π, une excentricité (e) d'une seconde ellipse projetée dans le plan de teinte et de chrominance (O, a*,b*) comprise entre 0.3 et 0.4, et une dynamique de la luminance perçue (j*) comprise entre 5 et 100, le seuil (S1) entre les deux portions étant fixé entre 45 et 55% des valeurs en niveaux de gris (NG).

10. Procédé de colorisation d'une image infrarouge selon l'une des revendications 6 à 9, ***dans lequel*** une quatrième palette prédéfinie présente une première portion avec une chrominance nulle et une dynamique de la luminance perçue (j*) comprise entre 0 et 100 ; puis une seconde portion avec une teinte à l'apogée (h_{c}*) comprise entre 30 et 35°, une chrominance à l'apogée (c_{c}*) comprise entre 30 et 40, une dynamique du vecteur d'angle polaire Φ comprise entre 2π et 0, une excentricité (e) d'une ellipse projetée dans le plan de teinte et de chrominance (O, a*,b*) comprise entre 0.8 et 0.9, et une dynamique de la luminance perçue (j*) comprise entre 100 et 30, le seuil (S2) entre les deux portions étant fixé entre 75 et 85% des valeurs en niveaux de gris (NG).

## Patentansprüche

1. Verfahren zur Kolorierung eines Infrarotbildes (11), die folgenden Schritte umfassend:
- Erfassen eines Infrarotbildes (11), das ausgehend von einem Infrarot-Sensor (10) erhalten wurde, welcher eine Gesamtheit von Elementardetektoren umfasst, wobei das Infrarotbild (11) für jeden Elementardetektor ein Pixel umfasst, dessen Wert anhand von Graustufen (NG) kodiert ist, welche einem Wert entsprechen, der für eine Infrarotstrahlung steht, wie sie von dem Elementardetektor empfangen wurde; und
- Erzeugen eines kolorierten Bildes (13), indem jedem Pixelwert, der anhand von Graustufen (NG) kodiert ist, ein Pixelwert zugeordnet wird, der mittels einer Farbpalette (12) in einem Farbraum kodiert ist;
**dadurch *gekennzeichnet,* dass** die Farbpalette (12) unter Verwendung einer parametrischen Bahnkurve, in welcher ein Parameter einem Polwinkelvektor Φ der parametrischen Bahnkurve entspricht, von einem Palettenerzeugungsmodul (20) in einem CIE CAM02-UCS-Raum festgelegt wird, wobei die Bahnkurve derart festgelegt ist, dass :
- die parametrische Bahnkurve, wenn sie auf eine Farbgrad- und Chrominanzebene (O, a*, b*) projiziert wird, eine oder zwei Ellipsen beschreibt; und
- ein Dynamikbereich der wahrgenommenen Luminanz (j*), unter Bezugnahme auf die Graustufenwerte (NG), eine oder zwei Geraden beschreibt.

2. Verfahren zur Kolorierung eines Infrarotbildes nach Anspruch 1, wo bei die parametrische Bahnkurve die folgende Beziehung erfüllt: $\left\{\begin{matrix}a ′ \left(ϕ\right) = {a}_{ell} \left(cosϕ-1\right) \\ b ′ \left(ϕ\right) = {b}_{ell} sinϕ\end{matrix}\right.$ mit einer ersten Halbachse aₑₗₗ, der welche Chrominanz beim Spitzenwert (c_{c}*), geteilt durch zwei, entspricht, und einer zweiten Halbachse, bₑₗₗ, die in Abhängigkeit von der ersten Halbachse, aₑₗₗ, festgelegt wird, mit: ${b}_{ell} = {a}_{ell} \sqrt{1 - {e}^{2}} ;$ wenn eine exzentrische Beschaffenheit, e, der Ellipse positiv ist; und ${b}_{ell} = \frac{{a}_{ell}}{\sqrt{1 - {e}^{2}}} ;$ wenn die exzentrische Beschaffenheit der Ellipse est negativ ist.

3. Verfahren zur Kolorierung eines Infrarotbildes nach Anspruch 1 oder 2, ***in welchem*** das Verfahren weiterhin die folgenden Schritte umfasst:
- Anzeigen des kolorierten Bildes (13) auf einem Bildschirm (14), der für einen Anwender sichtbar ist; und
- Übernehmen, ausgehend von einer Mensch-Maschine-Schnittstelle (15), der erwarteten Kolorierungsmodifikationen durch den Anwender.

4. Verfahren zur Kolorierung eines Infrarotbildes nach Anspruch 3, ***in welchem*** es die Mensch-Maschine-Schnittstelle (15) ermöglicht, einen Farbgrad beim Spitzenwert (h_{c}*), eine Chrominanz beim Spitzenwert (c_{c}*), einen Dynamikbereich des Polwinkelvektors Φ, eine exzentrische Beschaffenheit, e, der mindestens einen Ellipse, welche auf die Farbgrad- und Chrominanzebene (O, a*,b*) projiziert wird, und/oder einen Dynamikbereich der wahrgenommenen Luminanz (j*) zu modifizieren.

5. Verfahren zur Kolorierung eines Infrarotbildes nach einem der Ansprüche 1 bis 4, ***in welchem*** der Dynamikbereich des Polwinkelvektors Φ derart beschränkt wird, dass er zwischen 0 und 2*π* oder 2π und 0 liegt.

6. Verfahren zur Kolorierung eines Infrarotbildes nach einem der Ansprüche 3 und 4, ***in welchem*** es die Mensch-Maschine-Schnittstelle (15) ermöglicht, vorbestimmte Paletten auszuwählen.

7. Verfahren zur Kolorierung eines Infrarotbildes nach Anspruch 6, ***in welchem*** eine erste vorbestimmte Palette einen Farbgrad beim Spitzenwert (h_{c}*) im Bereich von 20 bis 30°, eine Chrominanz beim Spitzenwert (c_{c}*) im Bereich von 30 bis 40, einen Dynamikbereich des Polwinkelvektors Φ im Bereich von 0 bis 1,8π, eine exzentrische Beschaffenheit (e) einer Ellipse, welche auf die Farbgrad- und Chrominanzebene (O, a*,b*) projiziert wird, im Bereich von -0,35 bis -0,25, und einen Dynamikbereich der wahrgenommenen Luminanz (j*) im Bereich von 5 bis 100 aufweist.

8. Verfahren zur Kolorierung eines Infrarotbildes nach Anspruch 6 oder 7, ***in welchem*** eine zweite vorbestimmte Palette einen Farbgrad beim Spitzenwert (h_{c}*) im Bereich von - 170 bis -160°, eine Chrominanz beim Spitzenwert (c_{c}*) im Bereich von 10 bis 20, einen Dynamikbereich des Polwinkelvektors Φ im Bereich von 0 bis 2π, eine exzentrische Beschaffenheit, e, einer Ellipse, welche auf die Farbgrad- und Chrominanzebene (O, a*,b*) projiziert wird, im Bereich von 0,2 bis 0,4, und einen Dynamikbereich der wahrgenommenen Luminanz (j*) im Bereich von 100 bis 20 aufweist.

9. Verfahren zur Kolorierung eines Infrarotbildes nach einem der Ansprüche 6 bis 8,***in welchem*** eine dritte vorbestimmte Palette einen ersten Abschnitt mit einem Farbgrad beim Spitzenwert (h_{c}*) im Bereich von -110 bis -100°, einer Chrominanz beim Spitzenwert (c_{c}*) im Bereich von 15 bis 20, einem Dynamikbereich des Polwinkelvektors ^{®} im Bereich von 2*π* bis 0, einer exzentrischen Beschaffenheit (e) einer ersten Ellipse, welche auf die Farbgrad- und Chrominanzebene (O, a*,b*) projiziert wird, im Bereich von 0,5 bis 0,7, und einem Dynamikbereich der wahrgenommenen Luminanz (j*) im Bereich von 100 bis 5; und weiterhin einen zweiten Abschnitt mit einem Farbgrad beim Spitzenwert (h_{c}*) im Bereich von 25 bis 40°, einer Chrominanz beim Spitzenwert (c_{c}*) im Bereich von 30 bis 40, einem Dynamikbereich des Polwinkelvektors Φ im Bereich von 0 bis 1,8π, einer exzentrischen Beschaffenheit (e) einer zweiten Ellipse, welche auf die Farbgrad- und Chrominanzebene (O, a*,b*) projiziert wird, im Bereich von 0,3 bis 0,4, und einem Dynamikbereich der wahrgenommenen Luminanz (j*) im Bereich von 5 bis 100 aufweist, wobei der Schwellenwert (S1) zwischen den beiden Abschnitten derart festgelegt ist, dass er zwischen 45 und 55% der Graustufenwerte (NG) beträgt.

10. Verfahren zur Kolorierung eines Infrarotbildes nach einem der Ansprüche 6 bis 9,***in welchem*** eine vierte vorbestimmte Palette einen ersten Abschnitt mit einer Chrominanz von null und einem Dynamikbereich der wahrgenommenen Luminanz (j*) im Bereich von 0 bis 100; und weiterhin einen zweiten Abschnitt mit einem Farbgrad beim Spitzenwert (h_{c}*) im Bereich von 30 bis 35°, einer Chrominanz beim Spitzenwert (c_{c}*) im Bereich von 30 bis 40, einem Dynamikbereich des Polwinkelvektors Φ im Bereich von *2π* bis 0, einer exzentrischen Beschaffenheit (e) einer Ellipse, welche auf die Farbton- und Chrominanzebene (O, a*,b*) projiziert wird, im Bereich von 0,8 bis 0,9, und einem Dynamikbereich der wahrgenommenen Luminanz (j*) im Bereich von 100 bis 30 aufweist, wobei der Schwellenwert (S2) zwischen den beiden Abschnitten derart festgelegt ist, dass er zwischen 75 und 85% der Graustufenwerte (NG) beträgt.

## Claims

1. A method of colorizing an infrared image (11) comprising the following steps:
- acquisition of an infrared image (11) obtained from an infrared sensor (10) comprising a set of elementary detectors, said infrared image (11) comprising, for each elementary detector, a pixel having its value coded in grayscale (NG) corresponding to a value representing an infrared radiation received by said elementary detector; and
- generation of a colorized image (13) by associating to each pixel value coded in grayscale (NG) a pixel value coded in a color space by means of a color palette (12);
***characterized* in that** said color palette (12) is defined in the CIE CAM02-UCS space by a module for generating palettes (20) using a parametric trajectory in which a parameter is a polar angle vector Φ of the parametric trajectory, the latter being defined so that:
- the parametric trajectory projected into a hue and chrominance plane (O, a*,b*) follows one or two ellipses; and
- a dynamic range of the perceived luminance (j*) with respect to the grayscale values (NG) follows one or two straight lines.

2. The method of colorizing an infrared image according to claim 1, ***wherein*** the parametric trajectory follows the following relation: $\left\{\begin{matrix}a ′ \left(ϕ\right) = {a}_{ell} \left(cosϕ-1\right) \\ b ′ \left(ϕ\right) = {b}_{ell} sinϕ\end{matrix}\right.$ with a first half-axis aₑₗₗ corresponding to a peak chrominance (c_{c}*) divided by two, and a second half-axis bₑₗₗ defined as a function of the first half-axis aₑₗₗ with: ${b}_{ell} = {a}_{ell} \sqrt{1 - {e}^{2}} ;$ if an eccentricity e of the ellipse is positive; and ${b}_{ell} = \frac{{a}_{ell}}{\sqrt{1 - {e}^{2}}} ;$ if the eccentricity e of the ellipse is negative.

3. The method of colorizing an infrared image according to claim 1 or 2, ***wherein*** the method also comprises the following steps:
- display of said colorized image (13) on a screen visible (14) by a user; and
- recovery, from a man-machine interface (15), of the colorization changes expected by the user.

4. The method of colorizing an infrared image according to claim 3, ***wherein*** the man-machine interface (15) enables to modify a peak hue (h_{c}*), a peak chrominance (c_{c}*), a dynamic range of the polar angle vector Φ, an eccentricity *e* of the at least one ellipse projected into the hue and chrominance plane (O, a*,b*), and/or a dynamic range of the perceived luminance (j*).

5. The method of colorizing an infrared image according to one of claims 1 to 4, ***wherein*** the dynamic range of the polar angle vector Φ is limited between 0 and 2π or 2π and 0.

6. The method of colorizing an infrared image according to one of claims 3 to 5, ***wherein*** said man-machine interface (15) enables to select predefined palettes.

7. The method of colorizing an infrared image according to claim 6, ***wherein*** a first predefined palette has a peak hue (h_{c}*) in the range from 20 to 30°, a peak chrominance (c_{c}*) in the range from 30 to 40, a dynamic range of the polar angle vector Φ in the range from 0 to 1.8π, an eccentricity (e) of an ellipse projected into the hue and chrominance plane (O, a*,b*) in the range from -0.35 to -0.25, and a dynamic range of the perceived luminance (j*) in the range from 5 to 100.

8. The method of colorizing an infrared image according to claim 6 or 7, ***wherein** a* second predefined palette has a peak hue (h_{c}*) in the range from -170 to -160°, a peak chrominance (c_{c}*) in the range from 10 to 20, a dynamic range of the polar angle vector Φ in the range from 0 to 2π, an eccentricity e of an ellipse projected into the hue and chrominance plane (O, a*,b*) in the range from 0.2 to 0.4, and a dynamic range of the perceived luminance (j*) in the range from 100 to 20.

9. The method of colorizing an infrared image according to one of claims 6 to 8, ***wherein*** a third predefined palette has a first portion with peak hue (h_{c}*) in the range from - 110 to -100°, a peak chrominance (c_{c}*) in the range from 15 to 20, a dynamic range of the polar angle vector Φ in the range from 2π to 0, an eccentricity (e) of a first ellipse projected into the hue and chrominance plane (O, a*,b*) in the range from 0.5 to 0.7, and a dynamic range of the perceived luminance (j*) in the range from 100 to 5; then a second portion with a peak hue (h_{c}*) in the range from 25 to 40°, a peak chrominance (c_{c}*) in the range from 30 to 40, a dynamic range of the polar angle vector Φ in the range from 0 to 1.8π, an eccentricity (e) of a second ellipse projected into the hue and chrominance plane (O, a*,b*) in the range from 0.3 to 0.4, and a dynamic range of the perceived luminance (j*) in the range from 5 to 100, the threshold (S1) between the two portions being set between 45 and 55% of the grayscale values (NG).

10. The method of colorizing an infrared image according to one of claims 6 to 9, ***wherein*** a fourth predefined palette has a first portion with a null chrominance and a dynamic range of the perceived luminance (j*) in the range from 0 to 100; and then a second portion with a peak hue (h_{c}*) in the range from 30 to 35°, a peak chrominance (c_{c}*) in the range from 30 to 40, a dynamic range of the polar angle vector Φ in the range from 2π to 0, an eccentricity (e) of an ellipse projected into the hue and chrominance plane (O, a*,b*) in the range from 0.8 to 0.9, and a dynamic range of the perceived luminance (j*) in the range from 100 to 30, the threshold (S2) between the two portions being set between 75 and 85% of the grayscale values (NG).
